# EUROPÄISCHE PATENTANMELDUNG

(11) **EP 1 452 934 A2**
(43) Veröffentlichungstag der Anmeldung: **01.09.2004**
(21) Anmeldenummer: 04003953.9
(22) Anmeldetag: 21.02.2004
(51) Int. Cl.: G04G 5/00

(54) **Verfahren zur Ermittlung einer Zeitinformation**

(30) Priorität: 25.02.2003 DE 10308232
(71) Anmelder: Francotyp-Postalia AG & Co. KG, 16547 Birkenwerder (DE); Bieber, Wolf-Rüdiger, 42399 Wuppertal (DE)
(72) Erfinder: Baum, Volker, 13189 Berlin (DE); Bleumer, Gerrit, 16552 Schildow (DE); Heinrich, Clemens, 12161 Berlin (DE); Kampert, Werner, 22081 Hamburg (DE); Rosenau, Dirk, 13469 Berlin (DE); Schlaaff, Torsten, 16341 Zepernick (DE); Bieber, Wolf-Rüdiger, 42399 Wuppertal (DE)
(74) Vertreter: Cohausz & Florack

(57) **Zusammenfassung**

Verfahren zur Ermittlung einer Zeitinformation, bei dem eine Zeitermittlungseinheit (2) wenigstens ein von einer ersten Zeitquelle (8) stammendes erstes Zeitsignal erhält und die Zeitinformation in einem Zeitermittlungsschritt unter Berücksichtigung des ersten Zeitsignals ermittelt wird, wobei die Zeitermittlungseinheit (2) wenigstens ein zweites Zeitsignal erhält und die Zeitinformation in dem Zeitermittlungsschritt unter Berücksichtigung des zweiten Zeitsignals erfolgt. Anordnung zur Durchführung des Verfahrens.

## Beschreibung

Die vorliegende Erfindung betrifft ein Verfahren zur Ermittlung einer Zeitinformation, bei dem eine Zeitermittlungseinheit wenigstens ein von einer ersten Zeitquelle stammendes erstes Zeitsignal erhält. Die Zeitinformation wird dabei in einem Zeitermittlungsschritt unter Berücksichtigung des ersten Zeitsignals ermittelt. Sie betrifft weiterhin eine entsprechende Anordnung, welche sich zur Durchführung des erfindungsgemäßen Verfahrens eignet.

Es gibt eine Reihe von Anwendungen, bei denen es erforderlich ist, einem bestimmten Ereignis eine Information über den Zeitpunkt des Eintritts des Ereignisses zuzuordnen. Üblicherweise geschieht dies, indem eine Ereignisinformation, welche das Ereignis beschreibt, mit einer entsprechenden Zeitinformation verknüpft wird, welche den Zeitpunkt des Eintritts des Ereignisses kennzeichnet. Beispiele für derartige Anwendungen sind die Zugangskontrolle bzw. Zugangserfassung zu bestimmten Einrichtungen, wie beispielsweise Gebäuden oder anderen räumlich abgegrenzten Bereichen. Hierbei wird der Zeitpunkt erfasst, zu dem eine bestimmte Person oder ein bestimmter Gegenstand in den abgegrenzten Bereich eintritt bzw. diesen verlässt. Die Ereignisinformation enthält dabei zumindest eine Information, welche die Person oder den Gegenstand identifiziert. In der Regel kennzeichnet sie auch den abgegrenzten Bereich sowie die Art des Ereignisses (Zutritt oder Verlassen).

Weitere Beispiele für derartige Anwendungen ist die Erfassung der Nutzung bestimmter Dienste, beispielsweise die Erfassung des Zugriffs auf bestimmten Einrichtungen, insbesondere auf Datenbanken oder dergleichen. Auch hier ist es von Interesse, Informationen über den Zugreifer und die Art des Zugriffs (z. B. Lesen, Schreiben, Herunterladen von Daten etc.) mit einer entsprechenden Zeitinformation zu verknüpfen.

Die Zeitinformation wird bei derartigen Anwendungen häufig durch eine interne Echtzeituhr der Erfassungseinrichtung generiert, welche das betreffende Ereignis erfasst. Hierbei besteht jedoch zum einen das Problem, dass diese Echtzeituhr nicht zuletzt aus Kostengründen in der Regel vergleichsweise einfach aufgebaut ist und daher einer bestimmten Drift unterworfen ist, sodass sie regelmäßig mit einer entsprechend genauen Zeitquelle synchronisiert werden muss. Für eine derartige Synchronisation ist eine Reihe von Zeitserverdiensten bekannt, welche eine Echtzeitinformation zur Verfügung stellen, die über ein Datennetz, beispielsweise das Internet, abgerufen werden können.

Insbesondere bei sicherheitsrelevanten oder abrechnungsrelevanten Ereignissen ist es von besonderer Bedeutung, dass die Ereignisinformation zuverlässig und manipulationssicher mit einer entsprechend zuverlässigen Zeitinformation verknüpft wird.

Mag die Zeitermittlungseinheit durch eine entsprechende physische und gegebenenfalls logische Absicherung noch ausreichend vor Manipulationen geschützt sein, ist das System aber gerade bei dieser Synchronisation anfällig für Manipulationen. Dies rührt daher, dass die Zeitinformation bei der Übermittlung von der Zeitquelle zur Zeitermittlungseinheit vergleichsweise einfach manipulierbar ist.

Zwar ist es möglich, den Abruf der Echtzeitinformation über einen entsprechenden sicheren Kommunikationskanal erfolgen zu lassen, um eventuellen Manipulationen vorzubeugen. Diese Lösung ist jedoch vergleichsweise aufwändig und unflexibel, da sowohl die Zeitquelle als auch die Zeitermittlungseinheit hierfür entsprechend konfiguriert sein müssen. Zudem bleiben hier anderweitige Störungen bei der Erstellung der Echtzeitinformation in der Zeitquelle oder bei ihrer Übermittlung unerkannt.

Der vorliegenden Erfindung liegt daher die Aufgabe zu Grunde, ein Verfahren sowie eine Anordnung der eingangs genannten Art zur Verfügung zu stellen, welches bzw. welche die oben genannten Nachteile nicht oder zumindest in geringerem Maße aufweist und eine einfache, flexible und sichere Ermittlung der Zeitinformation ermöglicht.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einer Anordnung gemäß dem Oberbegriff des Anspruchs 16 durch die im kennzeichnenden Teil des Anspruchs 16 angegebenen Merkmale.

Der vorliegenden Erfindung liegt die technische Lehre zu Grunde, dass man eine einfache, flexible und sichere Ermittlung der Zeitinformation erzielt, wenn die Zeitermittlungseinheit wenigstens ein zweites Zeitsignal erhält und die Zeitinformation in dem Zeitermittlungsschritt unter Berücksichtigung des zweiten Zeitsignals erfolgt. Erfindungsgemäß wird mit anderen Worten eine Redundanz der zur Ermittlung der Zeitinformation vorhandenen Informationen erzeugt, die eine Reihe von Vorteilen mit sich bringt.

Durch die Berücksichtigung des ersten Zeitsignals und des zweiten Zeitsignals wird zum einen die Manipulation der Zeitinformation erschwert, da in jedem Fall beide Zeitsignale in der derselben Weise manipuliert werden müssten, um die Manipulation unerkannt bleiben zu lassen.

Durch die Berücksichtigung des ersten Zeitsignals und des zweiten Zeitsignals, ist es zum anderen möglich, einen Vergleich zwischen beiden Zeitsignalen anzustellen und bei einer vorgebbaren Abweichung des Inhalts der Zeitsignale nach einer vorgebbaren Fehlerroutine bei der Ermittlung der Zeitinformation zu verfahren. Hierdurch wird die Wahrscheinlichkeit reduziert, dass Fehler bei der Erstellung oder Übermittlung der Zeitsignale unerkannt bleiben. Mögliche Ausgestaltungen einer solchen Fehlerroutine werden weiter unten noch detailliert beschrieben.

Es versteht sich, dass bei der Ermittlung der Zeitinformation je nach der Genauigkeit, die für den speziellen Anwendungsfall erforderlich ist, eine Berücksichtigung der Zeit zwischen der Erzeugung des Zeitsignals und der Ermittlung der Zeitinformation erfolgen kann. Insbesondere kein hierbei die Laufzeit des jeweiligen Zeitsignals von der Zeitquelle zur Zeitermittlungseinheit berücksichtigt werden. Sind relevante Verzögerungen zu erwarten, kann weiterhin gegebenenfalls auch die Zeitspanne zwischen dem Eintritt eines Ereignisses, dem die Zeitinformation zugeordnet werden soll, und der Ermittlung der Zeitinformation berücksichtigt werden.

Um Manipulationen zu erschweren und damit die Manipulationssicherheit des Systems zu erhöhen, ist bei bevorzugten Varianten des erfindungsgemäßen Verfahrens vorgesehen, dass das erste Zeitsignal und das zweite Zeitsignal zumindest abschnittsweise auf unterschiedliche Weise zur Zeitermittlungseinheit übermittelt werden.

Vorzugsweise werden hierzu bei der Übermittlung des ersten Zeitsignals und des zweiten Zeitsignals zur Zeitermittlungseinheit zumindest abschnittsweise unterschiedliche Übertragungsprotokolle für die Übertragung der Zeitsignale genutzt. Zusätzlich oder alternativ kann auch vorgesehen sein, dass zumindest abschnittsweise unterschiedliche Übertragungswege genutzt werden. Es versteht sich, dass hierbei beliebige drahtgebundene oder drahtlose Übertragungstechniken verwendet werden können. So kann beispielsweise das erste Zeitsignal über eine bestimmte Strecke über einen Funkkanal übertragen werden, wie er für herkömmliche Funkuhren verwendet wird. Das zweite Zeitsignal kann demgegenüber über eine bestimmte Strecke beispielsweise in Form einer SMS (Short Message String) über ein Mobilfunknetz übertragen werden.

Bei weiteren bevorzugten Varianten des erfindungsgemäßen Verfahrens ist unter anderem zum Realisieren unterschiedlicher Übertragungswege vorgesehen, dass die Zeitermittlungseinheit das erste Zeitsignal über eine erste Empfangseinheit und das zweite Zeitsignal über eine zweite Empfangseinheit erhält. Hierbei ist eine Erhöhung der Manipulationssicherheit in besonders einfacher Weise dadurch erzielbar, dass die beiden Empfangseinheiten entsprechend weit voneinander entfernt angeordnet sind. Hierdurch wird die Manipulation erschwert, da sie gleichzeitig an unterschiedlichen Orten erfolgen müsste.

Die beiden Zeitsignale können von derselben ersten Zeitquelle stammen und in der oben beschriebenen Weise zur Zeitermittlungseinheit übermittelt worden sein. Eine besonders hohe Zuverlässigkeit und Manipulationssicherheit wird bei der Ermittlung der Zeitinformation jedoch dann erzielt, wenn das zweite Zeitsignal von einer zweiten Zeitquelle stammt. Hiermit ist bei der Ermittlung der Zeitinformation nicht nur die Erkennung von Fehlern oder Manipulationen bei der Übertragung der Zeitsignale möglich, sondern auch die Erkennung von Fehlern oder Manipulationen beim Generieren des jeweiligen Zeitsignals.

Es versteht sich, dass das erste Zeitsignal der ersten Zeitquelle und das zweite Zeitsignal der zweiten Zeitquelle hierbei auf gleichem Wege zur Zeitermittlungseinheit gelangen. können, beispielsweise über eine Funkverbindung zu einer mit der Zeitermittlungseinheit verbundenen Empfangseinheit. Ebenso können jedoch auch hier die oben beschriebenen unterschiedlichen Übertragungsprotokolle und zusätzlich oder alternativ die unterschiedlichen Übertragungswege zum Einsatz kommen. Ebenso kann auch hier wieder der Einsatz mehrerer Empfangseinheiten vorgesehenen sein.

Als Zeitquellen können beliebige Quellen verwendet werden, welche eine ausreichend genauen Information über die Echtzeit liefern. Hierbei kann auf die entsprechenden Einrichtungen beliebiger Institutionen zurückgegriffen werden, welche eine solche Information über die Echtzeit liefern. Dies sind beispielsweise entsprechende staatliche bzw. öffentliche Institutionen aber auch kommerzielle Anbieter solche Dienste. Schließlich kann auch auf Navigationssysteme (z. B. GPS), Mobilfunknetze oder andere Dienste zurückgegriffen werden, welche eine entsprechende Information über die Echtzeit liefern.

Bei besonders bevorzugten Varianten des erfindungsgemäßen Verfahrens mit besonders hoher Qualität der ermittelten Zeitinformation erhält die Zeitermittlungseinheit wenigstens ein drittes Zeitsignal. Die Ermittlung der Zeitinformation erfolgt in dem Zeitermittlungsschritt dann unter Berücksichtigung des dritten Zeitsignals. Anhand dieses dritten Zeitsignals ist es möglich, eine weiter unten noch näher beschriebene Plausibilitätsprüfung der Inhalte der Zeitsignale durchzuführen, und bei der Ermittlung der Zeitinformation ausgehend von dieser Plausibilitätsprüfung nur diejenigen Zeitsignale heranzuziehen, welche als plausibel eingestuft werden.

Das dritte Zeitsignal kann dabei auf eine Weise zur Zeitermittlungseinheit gelangen, die sich wie oben beschrieben zumindest abschnittsweise von der Weise unterscheidet, auf die das erste und zweite Zeitsignal zur Zeitermittlungseinheit gelangen. Hierbei können wie oben beschrieben wieder unterschiedliche Übertragungsprotokolle, Übertragungswege und/oder Empfangseinheiten Anwendung finden.

Das dritte Zeitsignal kann sowohl von der ersten Zeitquelle als auch von einer gegebenenfalls vorhandenen zweiten Zeitquelle stammen. Bevorzugt stammt es von einer gesonderten dritten Zeitquelle. Es versteht sich hierbei im übrigen, dass bei der Ermittlung der Zeitinformation ähnlich dem dritten Zeitsignal auch noch weitere Zeitsignale verwendet werden können.

Bei vorteilhaften Weiterbildungen des erfindungsgemäßen Verfahrens wird in dem Zeitermittlungsschritt das vierte Zeitsignal einer Echtzeituhr der Zeitermittlungseinheit berücksichtigt. Dieses vierte Zeitsignal erhöht wie schon das oben beschriebene dritte Zeitsignal die Qualität der Ermittlung der Zeitinformation, da es die Möglichkeiten der Plausibilitätsprüfung verbessert. Zudem kann das vierte Zeitsignal als vertrauenswürdig eingestuft werden, wenn die Echtzeituhr in einer entsprechend manipulationssicheren Umgebung angeordnet ist und auch bei ihrer gegebenenfalls erforderlichen Synchronisation eine entsprechende Manipulationssicherheit gewährleistet ist.

Bei besonders vorteilhaften Ausgestaltungen des erfindungsgemäßen Verfahrens erfolgt in dem Zeitermittlungsschritt, wie oben bereits angedeutet, ein Auswahlschritt, in dem eine Plausibilitätsprüfung des Inhalts der Zeitsignale nach einem vorgebbaren Plausibilitätskriterium vorgenommen wird. Nur die als plausibel eingestuften Zeitsignale werden dann zur Bestimmung der Zeitinformation ausgewählt und verwendet.

Liegen z. B. nur ein erstes Zeitsignal und ein zweites Zeitsignal in der Zeitermittlungseinheit vor, so kann im Rahmen der Plausibilitätsprüfung bei einer bestimmten vorgegebenen Abweichung zwischen den Inhalten der Zeitsignale in einer Fehlerroutine vorgesehenen sein, dass beide Zeitsignale verworfen werden und eine neue Ermittlung mit neuen Zeitsignalen initiiert wird. Die vorgegebene Abweichung stellt dabei das Plausibilitätskriterium dar. Ebenso kann verfahren werden, wenn mehr als zwei Zeitsignale vorliegen, deren jeweilige Abweichungen oberhalb eines bestimmten vorgegebenen Wertes liegen.

Liegen bei mehr als zwei verfügbaren Zeitsignalen die Inhalte mehrerer Zeitsignale innerhalb eines bestimmten Toleranzbereiches der Abweichung, während die Inhalte eines oder mehrerer anderer Zeitsignale außerhalb dieses Toleranzbereiches liegen, so können die Zeitsignale, die innerhalb dieses Toleranzbereiches liegen, als plausibel eingestuft und damit ausgewählt werden, während die übrigen als nicht plausibel eingestuft und damit für die Ermittlung der Zeitinformation verworfen werden.

Bei der Plausibilitätsprüfung wird bevorzugt auch die Zuverlässigkeit bzw. Qualität der einzelnen Zeitsignale berücksichtigt, die sowohl durch die Zeitquelle selbst als auch durch die Übertragung zur Zeitermittlungseinheit beeinflusst wird. Bei der Plausibilitätsprüfung und der nachfolgenden Auswahl kann den Zeitsignalen von Zeitquellen, die als besonders zuverlässig eingestuft werden, ein höheres Gewicht beigemessen werden. Der Plausibilitätsprüfungsalgorithmus kann beispielsweise so gestaltet sein, dass er im Fall einer unzulässigen Abweichung eines als besonders zuverlässige eingestuften Zeitsignals anders verfährt als im Fall einer unzulässigen Abweichung eines als wenig zuverlässige eingestuften Zeitsignals.

Die Bestimmung der Zeitinformation kann grundsätzlich in beliebiger geeigneter Weise erfolgen. So kann beispielsweise der Inhalt eines der verwendeten Zeitsignale ausgewählt und für die Zeitinformation verwendet werden. Bevorzugt wird in dem Zeitermittlungsschritt zur Bestimmung der Zeitinformation ein Mittelwert aus den Inhalten der zur Bestimmung der Zeitinformation verwendeten Zeitsignale gebildet. Vorzugsweise wird dabei den Inhalten der Zeitsignale nach einem vorgegebenen Gewichtungskriterium eine Gewichtung zugeordnet. Zur Bestimmung der Zeitinformation wird dann ein gewichteter Mittelwert aus den gewichteten Inhalten der zur Bestimmung der Zeitinformation verwendeten Zeitsignale gebildet.

Die Gewichtung kann dabei in Abhängigkeit von der Zuverlässigkeit bzw. Qualität des jeweiligen Zeitsignals erfolgen. Diese Zuverlässigkeit bzw. Qualität des jeweiligen Zeitsignals kann durch eine Qualitätsprüfung ermittelt werden, bei der in regelmäßigen Abständen die relativen Drifts zwischen den verwendeten Zeitquellen sowie Diskontinuitäten, beispielsweise Sprünge, in den Inhalten der jeweiligen Zeitsignale erfasst werden und in die Beurteilung der Zuverlässigkeit bzw. Qualität des jeweiligen Zeitsignals, insbesondere in dessen Gewichtung, einfließen. Diese Qualitätsprüfung kann beispielsweise in einer mit der Zeitermittlungseinheit verbundenen oder in der Zeitermittlungseinheit integrierten Qualitätsprüfungseinheit erfolgen.

Bei vorteilhaften Varianten des erfindungsgemäßen Verfahrens ist vorgesehenen, dass anhand der ermittelten Zeitinformation eine Echtzeituhr der Zeitermittlungseinheit synchronisiert wird. Durch eine solche regelmäßige Synchronisierung wird in einfacher Weise die Qualität eines von dieser Echtzeituhr stammenden Zeitsignals erhöht.

Die Zeitinformation kann grundsätzlich in beliebiger Weise als entsprechender Datensatz ausgegeben werden. Vorzugsweise wird aus der ermittelten Zeitinformation ein so genannter Zeitstempel generiert.

Die nach dem oben beschriebenen Verfahren erstellte Zeitinformation kann in der Zeitermittlungseinheit zur weiteren Verwendung gespeichert werden oder anderen Anwendungen zur Verfügung gestellt werden. So kann sie beispielsweise dazu genutzt werden, die Systemzeit in einem angeschlossenen Datenverarbeitungsnetzwerk, beispielsweise einem LAN oder einem WAN eines Unternehmens oder dergleichen, vorzugeben. Ebenso kann die Zeitinformation natürlich durch die Anwendung, welche die Zeitinformation anfordert, mit weiteren Informationen, beispielsweise einer Ereignisinformation oder dergleichen, verknüpft werden.

Je nach den mit der betreffenden Anwendung einhergehenden Sicherheitsanforderungen kann die Zeitinformation dabei gegebenenfalls in beliebiger geeigneter Weise abgesichert werden. Insbesondere bei sicherheitsrelevanten oder abrechnungsrelevanten Anwendungen, welche die Zeitinformation verwenden, erfolgt bevorzugt eine ausreichend manipulationssichere Absicherung der Zeitinformation. Hierbei finden vorzugsweise kryptographische Mittel Anwendung, welche die Authentizität der Zeitinformation überprüfbar machen. Als Beispiele seien hier die Verschlüsselung zumindest von Teilen der Information, digitale Signaturen, aber auch so genannte MACs (Message Authentication Codes) oder dergleichen genannt.

Bei besonders vorteilhaften Varianten des erfindungsgemäßen Verfahrens ist vorgesehenen, dass für die Zeitinformation ein kryptografisches Zertifikat erstellt wird. Hiermit ist es möglich, auf Anforderung eine zertifizierte Zeitinformation zur Verfügung zu stellen. Diese wird dann bevorzugt in geeigneter Weise mit der Zeitinformation verknüpft und für die weitere Verwendung zur Verfügung gestellt.

Die vorliegende Erfindung betrifft weiterhin ein Verfahren zur zeitlichen Qualifizierung einer ein zeitliches Ereignis repräsentierenden Ereignisinformation. Bei diesem wird die Ereignisinformation mit einer Zeitinformation verknüpft, wobei erfindungsgemäß vorgesehen ist, dass die Zeitinformation mit einem Verfahren nach einem der vorhergehenden Ansprüche ermittelt wird.

Je nach den mit der betreffenden Anwendung einhergehenden Sicherheitsanforderungen kann die Ereignisinformation in beliebiger Weise mit der Zeitinformation verknüpft werden. Insbesondere bei sicherheitsrelevanten oder abrechnungsrelevanten Ereignissen erfolgt jedoch bevorzugt eine ausreichend manipulationssichere Verknüpfung zwischen der Ereignisinformation und der Zeitinformation. Hierbei finden vorzugsweise kryptographische Mittel Anwendung, welche die Authentizität der Ereignisinformation und der mit ihr verknüpften Zeitinformation überprüfbar machen. Als Beispiele seien auch hier wieder die Verschlüsselung zumindest von Teilen dieser Informationen, digitale Signaturen und MACs (Message Authentication Codes) oder dergleichen genannt.

In diesem Zusammenhang besonders vorteilhafte Varianten des erfindungsgemäßen Verfahrens zeichnen sich dadurch aus, dass die Zeitinformation mit der Ereignisinformation zu einer ersten Nachricht verknüpft wird, für die erste Nachricht ein erstes kryptographisches Zertifikat erstellt wird und die erste Nachricht mit dem ersten kryptographischen Zertifikat verknüpft wird.

Das Zertifikat kann dabei in beliebiger geeigneter Weise nach beliebigen bekannten Zertifizierungsverfahren bzw. Zertifizierungsstandards (z. B. X.509, PKIX, PGP, SKIP etc.) erstellt werden. Es kann beispielsweise eine digitale Signatur des Herausgebers des Zertifikats über der ersten Nachricht enthalten.

Bei besonders vorteilhaften Varianten des erfindungsgemäßen Verfahrens ist eine zweistufige Zertifizierung vorgesehen. Hierbei wird aus der Zeitinformation zunächst ein Zeitstempel generiert. Für den Zeitstempel wird dann ein zweites kryptographisches Zertifikat erstellt und mit dem Zeitstempel zu einer zweiten Nachricht verknüpft. Die zweite Nachricht wird dann mit der Ereignisinformation zu einer dritten Nachricht verknüpft, für die dann ein drittes kryptographisches Zertifikat erstellt wird. Schließlich wird die dritte Nachricht mit dem dritten kryptographischen Zertifikat verknüpft. Hierdurch wird sowohl die Authentizität der Zeitinformation als auch die Authentizität der Verknüpfung mit der Ereignisinformationen überprüfbar. Dabei versteht es sich, dass das zweite kryptographische Zertifikat und das dritte kryptographische Zertifikat von unterschiedlichen Herausgebern stammen können.

Die vorliegende Erfindung betrifft weiterhin eine Anordnung zur Ermittlung einer Zeitinformation mit einer Zeitermittlungseinheit und wenigstens einer mit der , Zeitermittlungseinheit verbundenen ersten Empfangseinheit. Die Zeitermittlungseinheit ist zum Ermitteln der Zeitinformation unter Berücksichtigung wenigstens eines von einer ersten Zeitquelle stammenden, über die Empfangseinheit erhaltenen ersten Zeitsignals ausgebildet. Erfindungsgemäß ist vorgesehen, dass die Zeitermittlungseinheit zum Ermitteln der Zeitinformation unter Berücksichtigung wenigstens eines über die erste Empfangseinheit oder eine zweite Empfangseinheit erhaltenen zweiten Zeitsignals ausgebildet ist.

Mit der erfindungsgemäßen Anordnung lässt sich das oben beschriebene erfindungsgemäße Verfahren durchführen. Ebenso lassen sich hiermit die oben beschriebenen Vorteile und Ausgestaltungen des Verfahrens in derselben Weise realisieren, sodass hier zur Vermeidung von Wiederholungen lediglich auf die obigen Ausführungen Bezug genommen wird.

Vorzugsweise ist bei der erfindungsgemäßen Anordnung ein erster Übermittlungskanal zur Übermittlung des ersten Zeitsignals an die Zeitermittlungseinheit und ein zweiter Übermittlungskanal zur Übermittlung des zweiten Zeitsignals an die Zeitermittlungseinheit vorgesehen. Um die oben beschriebene Übermittlung der Zeitsignale auf unterschiedliche Weise zu realisieren, unterscheiden sich der erste Übermittlungskanal und der zweite Übermittlungskanal zumindest abschnittsweise. Vorzugsweise weisen der erste Übermittlungskanal und der zweite Übermittlungskanal hierbei zumindest abschnittsweise unterschiedliche Übertragungsprotokolle und/oder zumindest abschnittsweise unterschiedliche Übertragungswege auf.

Soll auch ein drittes Zeitsignal berücksichtigt werden, so ist die Zeitermittlungseinheit zum Ermitteln der Zeitinformation unter Berücksichtigung wenigstens eines über eine Empfangseinheit erhaltenen dritten Zeitsignals ausgebildet. Hierbei findet bevorzugt eine dritte Empfangseinheit Anwendung, die mit der Zeitermittlungseinheit verbunden ist. Vorzugsweise wird wie beschriebenen ein viertes Zeitsignal berücksichtigt. Hierzu umfasst die Zeitermittlungseinheit wenigstens eine Echtzeituhr. Weiterhin ist sie dabei zum Ermitteln der Zeitinformation unter Berücksichtigung eines vierten Zeitsignals der Echtzeituhr ausgebildet.

Die erfindungsgemäße Anordnung kann grundsätzlich in beliebiger geeigneter Weise gestaltet sein. So können insbesondere für die Zeitermittlungseinheit je nach Komplexität der Zeitermittlung anwendungsspezifisch konfigurierte integrierte Schaltkreise (ASIC) verwendeten werden. Bei besonders flexiblen Varianten der erfindungsgemäßen Anordnung werden die Funktionen der Zeitermittlungseinheit durch eine zentrale Verarbeitungseinheit realisiert, welche hierzu auf entsprechende Programme zugreift, die in entsprechenden Speichern abgelegt sind, die mit der Verarbeitungseinheit verbunden sind. Vorzugsweise weist die Zeitermittlungseinheit daher eine mit der jeweiligen Empfangseinheit verbundene Verarbeitungseinheit auf, die zur Berechnung der Zeitinformation ausgebildet ist. Bei der Berechnung berücksichtigt die Verarbeitungseinheit die Zeitsignale und gereift auf einen Berechnungsalgorithmus zu, der in einem mit der Verarbeitungseinheit verbundenen ersten Speicher gespeichert ist.

Um die oben beschriebene Plausibilitätsprüfung des Inhalts der Zeitsignale durchzuführen, greift die Verarbeitungseinheit bevorzugt auf einen Plausibilitätsprüfungsalgorithmus und ein vorgebbares Plausibilitätskriterium zu, die in einem mit der Verarbeitungseinheit verbundenen zweiten Speicher gespeichert sind. Die Berechnung der Zeitinformation aus den Inhalten der als plausibel eingestuften Zeitsignale führt die Verarbeitungseinheit dann unter Zugriff auf den beschriebenen Berechnungsalgorithmus durch.

Bevorzugt erfolgt auch hier bei der Berechnung der Zeitinformation wieder die oben beschriebene Mittelwertbildung. Hierzu ist die Verarbeitungseinheit zur Berechnung der Zeitinformation als Mittelwert aus den Inhalten der verwendeten Zeitsignale ausgebildet. Weiter vorzugsweise wird wie beschrieben ein gewichteter Mittelwert berechnet. Hierzu ist die Verarbeitungseinheit zur Gewichtung der Inhalte der Zeitsignale unter Zugriff auf einen Gewichtungsalgorithmus und ein vorgebbares Gewichtungskriterium ausgebildet. Der Gewichtungsalgorithmus und das vorgebbare Gewichtungskriterium sind dabei in einem mit der Verarbeitungseinheit verbundenen dritten Speicher gespeichert. Die Verarbeitungseinheit berechnet die Zeitinformation dann als gewichteter Mittelwert aus den gewichteten Inhalten der verwendeten Zeitsignale.

Bei bevorzugten Varianten der erfindungsgemäßen Anordnung ist eine mit der Zeitermittlungseinheit verbundene oder in der Zeitermittlungseinheit integrierte Qualitätsprüfungseinheit vorgesehen, welche die oben beschriebene Prüfung der Qualität der Zeitsignale ausführt. Im Fall der Integration der Qualitätsprüfungseinheit in der Zeitermittlungseinheit ist deren Funktion bevorzugt ebenfalls durch die Verarbeitungseinheit realisiert, welche auf einen entsprechenden Speicher zugreift, der einen entsprechenden Qualitätsprüfungsalgorithmus sowie gegebenenfalls entsprechende Qualitätsprüfungskriterien enthält. Die durch die Qualitätsprüfungseinheit ermittelten Daten werden bevorzugt sowohl bei der oben beschriebenen Plausibilitätsprüfung als auch bei der oben beschriebenen Gewichtung durch die Verarbeitungseinheit verwendet.

Um die oben beschriebene Absicherung der Zeitinformation zu erzielen, kann die erfindungsgemäße Anordnung, insbesondere die Zeitermittlungseinheit, entsprechend ausgebildet sein. Bei bevorzugten Varianten der erfindungsgemäßen Anordnung ist dabei eine mit der Zeitermittlungseinheit verbindbare Zertifizierungseinheit vorgesehen, die zum Erstellen eines kryptographischen Zertifikats für die Zeitinformation ausgebildet ist. Es versteht sich, dass diese Zertifizierungseinheit alternativ auch in der Zeitermittlungseinheit integriert sein kann. Bevorzugt ist die Zeitermittlungseinheit oder die Zertifizierungseinheit zum Verknüpfen der Zeitinformation mit dem kryptographischen Zertifikat für die Zeitinformation ausgebildet.

Bei weiteren vorteilhaften Ausgestaltungen der erfindungsgemäßen Anordnung ist wenigstens eine ortsfeste oder mobile Ereigniserfassungseinrichtung zum Generieren einer Ereignisinformation vorgesehen ist; die ein zeitliches Ereignis repräsentiert. Diese Ereigniserfassungseinrichtung ist mit der Zeitermittlungseinheit zur Übermittlung der Ereignisinformation verbindbar. Die Zeitermittlungseinheit ist dabei zum Verknüpfen der Ereignisinformation mit der Zeitinformation ausgebildet, um die Ereignisinformation in der oben beschriebenen Weise zeitlich zu qualifizieren.

Um die oben beschriebene manipulationssichere Verknüpfung der Ereignisinformation mit der Zeitinformation zu realisieren, ist die Zeitermittlungseinheit bevorzugt zum Verknüpfen der Zeitinformation mit der Ereignisinformation zu einer ersten Nachricht ausgebildet. Weiterhin ist dann eine mit der Zeitermittlungseinheit verbindbare Zertifizierungseinheit vorgesehen, die zum Erstellen eines ersten kryptographischen Zertifikats für die erste Nachricht ausgebildet ist. Hierbei kann die Zertifizierungseinheit nach einem beliebigen geeigneten Zertifizierungsverfahren bzw. Zertifizierungsstandard arbeiten. Die Zeitermittlungseinheit oder die Zertifizierungseinheit ist schließlich zum Verknüpfen der ersten Nachricht mit dem ersten kryptographischen Zertifikat ausgebildet.

Bei bestimmten Weiterbildungen der erfindungsgemäßen Anordnung ist eine zweistufige Zertifizierung vorgesehenen. Hierzu ist die Zeitermittlungseinheit zum Generieren eines Zeitstempels aus der ermittelten Zeitinformation ausgebildet. Weiterhin ist eine mit der Zeitermittlungseinheit verbindbare Zertifizierungseinheit vorgesehen ist, die zum Erstellen eines zweiten kryptographischen Zertifikats für den Zeitstempel, ausgebildet ist. Die Zeitermittlungseinheit oder die Zertifizierungseinheit ist wiederum zum Verknüpfen des mit Zeitstempels mit dem zweiten kryptographischen Zertifikat zu einer zweiten Nachricht ausgebildet. Die Zeitermittlungseinheit ist weiterhin zum Verknüpfen der zweiten Nachricht mit der Ereignisinformation zu einer dritten Nachricht ausgebildet. Schließlich ist eine mit der Zeitermittlungseinheit verbindbare Zertifizierungseinheit vorgesehen, die zum Erstellen eines dritten kryptographischen Zertifikats für die dritte Nachricht ausgebildet ist. Hierbei kann es sich um dieselbe Zertifizierungseinheit handeln, die für die Zertifizierung des Zeitstempels zuständig ist. Es sich kann jedoch auch um eine weitere Zertifizierungseinheit handeln. Schließlich ist Zeitermittlungseinheit oder die Zertifizierungseinheit zum Verknüpfen der dritten Nachricht mit dem dritten kryptographischen Zertifikat ausgebildet.

Es versteht sich, dass bei anderen Varianten der Erfindung natürlich auch vorgesehen sein kann, dass die jeweilige oben beschriebene Zertifizierungseinheit in der Zeitermittlungseinheit integriert ist. Die Zertifizierungsfunktion kann beispielsweise ebenfalls durch die Verarbeitungseinheit realisiert sein, welche auf einen entsprechenden Speicher zugreift, der einen entsprechenden Zertifizierungsalgorithmus sowie entsprechende Schlüssel und Zertifikate enthält. Die durch die Qualitätsprüfungseinheit ermittelten Daten werden bevorzugt sowohl bei der oben beschriebenen Plausibilitätsprüfung als auch bei der oben beschriebenen Gewichtung durch die Verarbeitungseinheit verwendet.

Weiterhin versteht es sich, dass die Zertifizierungseinheit gegebenenfalls auch mehrere eigene Zertifikate bzw. durch vertrauenswürdige Dritte zertifizierte Schlüssel enthalten kann, die sie bei der Zertifikatsgenerierung verwendet. Deren jeweilige Verwendung kann hierbei beispielsweise durch die das Zertifikat anfordernde Anwendung vorgegeben sein.

Bei vorteilhaften Varianten der erfindungsgemäßen Anordnung erfolgt die zeitliche Qualifizierung der Ereignisinformationen automatisch. Hierzu ist die Ereigniserfassungseinrichtung zur Anforderung der zeitlichen Qualifizierung der Ereignisinformation von der Zeitermittlungseinheit bei Auftreten des zeitlichen Ereignisses ausgebildet. Bevorzugt wird hierbei die Ereignisinformation automatisch und unmittelbar mit einer entsprechenden Anforderungsnachricht an die Zeitermittlungseinheit übersandt.

Bei weiteren bevorzugten Ausgestaltungen der erfindungsgemäßen Anordnung ist die Zeitermittlungseinheit zur automatischen zeitlichen Qualifizierung einer empfangenen Information ausgebildet. Die Zeitermittlungseinheit kann hierbei mit anderen Worten nach Art eines Gateway ausgebildet und angeordnet sein, der beliebigen empfangenen Informationen automatisch eine entsprechende zeitliche Qualifizierung verleiht.

Weitere vorteilhafte Varianten der erfindungsgemäßen Anordnung zeichnen sich dadurch aus, dass wenigstens eine erste Zeitermittlungseinheit und wenigstens eine zweite Zeitermittlungseinheit vorgesehen ist, die mit der ersten Zeitermittlungseinheit um verbindbar ist. Hierbei sind unterschiedliche Hierarchiestufen vorgesehen, indem die erste Zeitermittlungseinheit zur Überprüfung der zweiten Zeitermittlungseinheit ausgebildet ist. Dies ist insbesondere bei Anwendungen mit mehreren dezentralen zweiten Zeitermittlungseinheiten von Vorteil. So kann hierdurch eine entsprechend enge zentrale Überwachung der zweiten Zeitermittlungseinheiten erfolgen. Hierbei können die zweiten Zeitermittlungseinheiten insbesondere dahingehend überwacht werden, ob an ihnen Unregelmäßigkeiten auftreten, welche auf Manipulationen oder andere Störungen hinweisen.

Ebenso kann die erste Zeitermittlungseinheit dazu benutzt werden, die zweiten Zeitermittlungseinheiten zu synchronisieren. Hierbei kann die erste Zeitermittlungseinheit die Zeitinformationen der zweiten Zeitermittlungseinheiten zur Ermittlung der Zeitinformation nutzen und dann ein Zeitvorgabesignal oder dergleichen an die zweiten Zeitermittlungseinheiten senden, welches diese zum Synchronisieren ihrer internen Echtzeituhren verwenden.

Weiterhin kann vorgesehen sein, dass die Rolle als erste und zweite Zeitermittlungseinheit nach einem vorgegebenen Schema, beispielsweise in vorgegebenen Zeitabständen, wechselt, um die Wahrscheinlichkeit einer zentralen Manipulation durch Manipulation der ersten Zeitermittlungseinheit zu reduzieren. Vorzugsweise findet ein zufallsgesteuerter Wechsel der Rolle als erste und zweite Zeitermittlungseinheit statt, da hierdurch eine besonders hohe Manipulationssicherheit erzielt wird. Ebenso kann ein solcher Wechsel natürlich vorgesehen sein, wenn die Zeitermittlungseinheit, welche die Rolle der ersten Zeitermittlungseinheit einnimmt, aus irgendwelchen Gründen nicht zur Verfügung steht.

Es versteht sich, dass sämtliche Aktionen der Zeitermittlungseinheit, der Zertifizierungseinheit und gegebenenfalls weitere Einheiten protokolliert und in einem entsprechenden Speicher zur späteren Verwendung abgelegt werden können. Derartige Protokolle werden insbesondere dann angelegt, wenn es zu Fehlern im Verfahrensablauf kommt, beispielsweise wenn einzelne oder gar mehrere Zeitsignale als nicht plausibel eingestuft werden. Um diese Protokolle vor Manipulationen zu schützen, können sie ebenfalls in geeigneter Weise abgesichert sein. Hier finden wieder die obigen Absicherungsmechanismen, insbesondere digitale Signaturen oder dergleichen, ihre Anwendung.

Wie bereits eingangs erwähnt, kann es sich bei dem zeitlich zu qualifizieren Ereignis um beliebiges Ereignis handeln, das im Zusammenhang mit beliebigen Anwendungen auftritt, die eine zeitliche Qualifikation, also die Zuordnung eines Zeitpunktes zu einem bestimmten Ereignis erfordern. Es versteht sich, dass das zeitlich zu qualifizierende Ereignis bei bestimmten Varianten der Erfindung auch das Eintreffen bestimmter Informationen in der Zeitermittlungseinheit sein kann.

Als Beispiel für Anwendungen, bei denen die Erfindung zum Einsatz kommen kann, seien hier nochmals die eingangs bereits erwähnte Zugangskontrolle bzw. Zugangserfassung zu bestimmten räumlich abgegrenzten Bereichen sowie die Erfassung des Zugriffs auf Betriebsmittel, wie beispielsweise Geräte, Maschinen aber auch Datenbanken etc., genannt. Ebenso kann die Erfindung im Bereich der Qualitätssicherung, beispielsweise im Bereich der Produktion, eingesetzt werden, da die Erfindung den Nachweis ermöglicht, dass bestimmte Ereignisse, beispielsweise der Beginn und das Ende bestimmter Produktions- oder Behandlungsschritte oder andere Vorgänge, zu bestimmten Zeitpunkten eingetreten sind.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:
- Figur 1: eine schematische Darstellung einer bevorzugten Ausführungsform der erfindungsgemäßen Anordnung zur Durchführung des erfindungsgemäßen Verfahrens;
- Figur 2: eine schematische Darstellung einer weiteren bevorzugten Ausführungsform der erfindungsgemäßen Anordnung;
- Figur 3: eine schematische Darstellung einer anderen bevorzugten Ausführungsform der erfindungsgemäßen Anordnung;
- Figur 4: eine schematische Darstellung einer weiteren bevorzugten Ausführungsform der erfindungsgemäßen Anordnung; ,
- Figur 5: eine schematische Darstellung einer weiteren bevorzugten Ausführungsform der erfindungsgemäßen Anordnung.

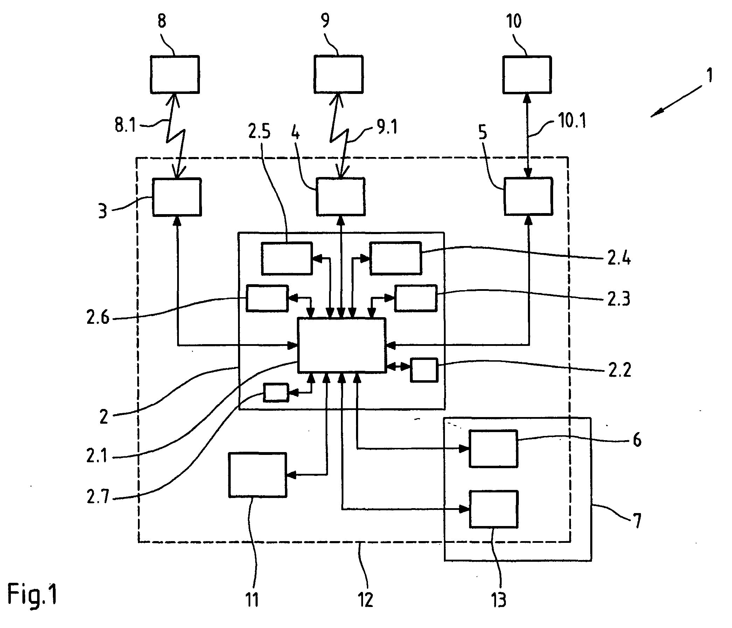

Figur 1 zeigt eine schematische Darstellung einer bevorzugten Ausführungsform der erfindungsgemäßen Anordnung 1 zur Durchführung des erfindungsgemäßen Verfahrens. Die Anordnung 1 umfasst eine Zeitermittlungseinheit 2 mit einer zentralen Verarbeitungseinheit 2.1, die mit einer ersten Empfangseinheit 3, einer zweiten Empfangseinheit 4 und einer dritten Empfangseinheit 5 verbunden ist.

Die Zeitermittlungseinheit 2 ist mit einer Ereigniserfassungseinrichtung in Form einer Zugangskontrolleinrichtung 6 verbunden, mit deren Hilfe der Zugang zu einem Gebäude 7 bzw. das Verlassen des Gebäudes 7 kontrolliert und erfasst wird. Dabei wird der Zugang zu dem Gebäude 7 bzw. dessen Verlassen in bekannter Weise nur gewährt, wenn die betreffende Person bestimmte Kriterien erfüllt, sich beispielsweise durch ein entsprechendes Identifikationsmerkmal als zugangsberechtigt identifizieren lässt. Wird in der Zugangskontrolleinrichtung 6 erfasst, dass das Zugangskriterium erfüllt ist, wird der Zugang gewährt und gegebenenfalls der tatsächliche Zugang durch geeignete Mittel erfasst. Gleichzeitig wird in der Zugangskontrolleinrichtung 6 eine Ereignisinformation generiert, welche ein Identifikationsmerkmal für die betreffende Person sowie eine Information über die Art des Ereignisses, hier den Zugang zum Gebäude 7, enthält. Diese Ereignisinformation wird von der Zugangskontrolleinrichtung 6 an die Zeitermittlungseinheit 2 gesandt. In der Zeitermittlungseinheit 2 wird der Ereignisinformation dann eine Zeitinformation zugeordnet wird, welche den Eintrittszeitpunkt des Ereignisses kennzeichnet.

Die Zeitermittlungseinheit 2 erhält über die erste Empfangseinheit 3 von einer ersten Zeitquelle 8 über einen ersten Übertragungskanal 8.1 ein erstes Zeitsignal. Weiterhin erhält die Zeitermittlungseinheit 2 über die zweite Empfangseinheit 4 von einer zweiten Zeitquelle 9 über einen zweiten Übertragungskanal 9.1 ein zweites Zeitsignal. Schließlich erhält die Zeitermittlungseinheit 2 über die dritte Empfangseinheit 5 von einer dritten Zeitquelle 10 über einen dritten Übertragungskanal 10.1 ein drittes Zeitsignal.

Die Zeitermittlungseinheit 2 erhält des erste und zweite Zeitsignal in regelmäßigen Abständen von der jeweiligen Zeitquelle. Das dritte Zeitsignal erhält die Zeitermittlungseinheit zwei nur auf Anforderung. Zu diesem Zweck ist die dritte Empfangseinheit 5 auch als Sendeeinheit ausgebildet, um von der dritten Zeitquelle 10 das dritte Zeitsignal bei Bedarf anzufordern. Es versteht sich jedoch, dass bei anderen Varianten der Erfindung auch vorgesehenen sein kann, dass mehrere oder alle Empfangseinheiten auch als Sendeeinheit ausgebildet sind, um von der betreffenden Zeitquelle das entsprechende Zeitsignal nur bei Bedarf anzufordern.

Die Übertragungskanäle 8.1, 9.1 und 10.1 unterscheiden sich dabei jeweils. Der erste Übertragungskanal 8.1 ist eine herkömmliche Funkverbindung, wie sie zum Beispiel für Funkuhren genutzt wird. Der zweite Übertragungskanal 9.1 ist ebenfalls eine herkömmliche Funkverbindung, die jedoch auf einer anderen Frequenz und mit einem anderen Übertragungsprotokoll arbeitet. Der dritte Übertragungskanal 10.1 ist eine Netzwerkverbindung, beispielsweise eine Internetverbindung, über die mittels eines Modems 5 als dritte Empfangseinheit eine Verbindung zu einem Server 10 als dritter Zeitquelle hergestellt wird.

Durch die unterschiedlichen Übertragungskanäle wird eine gewisse Manipulationssicherheit erzielt, da zur erfolgreichen Durchführung einer Manipulation alle drei Übertragungskanäle 8.1, 9.1 und 10.1 gleichzeitig in derselben Weise manipuliert werden müssten. Um die Manipulationssicherheit im Bereich der funkbasierten Übertragungskanäle 8.1 und 9.1 zu erhöhen, sind die beiden Empfangseinheiten 3 und 4 weit voneinander entfernt angeordnet. Hierdurch wird eine Manipulation, beispielsweise durch entsprechende Störsender erschwert.

Bei Eintreffen der Ereignisinformation von der Zugangskontrolleinheit 6 in der Verarbeitungseinheit 2.1 fragt diese zunächst die an den Empfangseinheiten 3 und 4 anliegenden ersten und zweiten Zeitsignale ab und fordert über die dritte Empfangseinheit 5 das dritte Zeitsignal an.

Sobald das erste, zweite und dritte Zeitsignal in einem - nicht dargestellten - Speicher der Zeitermittlungseinheit 2 vorhanden sind, ermittelt die Verarbeitungseinheit 2.1 unter Zugriff auf einen Berechnungsalgorithmus, der in einem mit der Verarbeitungseinheit 2.1 verbundenen ersten Speicher 2.2 abgelegt ist, die Zeitinformation, die den Eintrittszeitpunkt des Ereignisses repräsentiert. Hierbei werden sowohl die Laufzeiten des jeweiligen Zeitsignals als auch die Laufzeit der Ereignisinformation vom Eintritt des Ereignisses bis zum Eintreffen in der Verarbeitungseinheit 2.1 in geeigneter Weise durch entsprechende Korrektur der Inhalte der Zeitsignale berücksichtigt. Es versteht sich jedoch, dass bei anderen Varianten der Erfindung mit Signallaufzeiten, die im Hinblick auf die erforderliche Genauigkeit vergleichsweise kurz sind, eine solche Berücksichtigung der Signallaufzeiten auch pauschal erfolgen oder sogar ganz fehlen kann.

Die Verarbeitungseinheit 2.1 führt im Zeitermittlungsschritt zunächst Plausibilitätsprüfung der Zeitsignale durch. Dies erfolgt unter Zugriff auf einen Plausibilitätsprüfungsalgorithmus, der in einem mit der Verarbeitungseinheit 2.1 verbundenen zweiten Speicher 2.3 abgelegt ist. Hierbei wird zusätzlich ein viertes Zeitsignal herangezogen, das von einer mit der Verarbeitungseinheit 2.1 verbundenen Echtzeituhr 2.4 der Zeitermittlungseinheit 2 stammt.

Bei der Plausibilitätsprüfung wird ermittelt, ob die gegenseitigen Abweichungen der Inhalte der Zeitsignale innerhalb eines bestimmten Toleranzbereichs liegen. Dieser Toleranzbereich ist als ein Plausibilitätskriterium ebenfalls in dem zweiten Speicher 2.3 abgelegt. Liegen die relativen Abweichungen der Inhalte der Zeitsignale jeweils innerhalb dieses Toleranzbereichs, werden sämtliche Zeitsignale zur Berechnung der Zeitinformation herangezogen. Ist dies nicht der Fall, werden nur diejenigen Zeitsignale herangezogen, die gegebenenfalls nach weiteren Plausibilitätskriterien als plausibel eingestuft werden.

Bei der Berechnung der Zeitinformation wird in der Verarbeitungseinheit 2.1 ein gewichteter Mittelwert des Inhalts der als plausibel eingestuften Zeitsignale ermittelt. Zur Gewichtung der Inhalte der Zeitsignale greift die Verarbeitungseinheit 2.1 auf einen Gewichtungsalgorithmus und ein Gewichtungskriterium zu, die in einem mit der Verarbeitungseinheit 2.1 verbundenen dritten Speicher 2.5 abgelegt sind.

Sowohl bei der Plausibilitätseinstufung als auch bei der Gewichtung der Inhalte der Zeitsignale wird die Qualität des jeweiligen Zeitsignals berücksichtigt. Diese wird über eine in der Zeitermittlungseinheit 2 integrierte Qualitätsprüfungseinheit ermittelt, die im vorliegenden Beispiel durch die Verarbeitungseinheit 2.1 und einen Qualitätsprüfungsalgorithmus realisiert wird, der in einem mit der Verarbeitungseinheit 2.1 verbundenen vierten Speicher 2.6 abgelegt ist. Die Qualitätsprüfungseinheit überprüft in regelmäßigen Abständen die relativen Drifts zwischen den verwendeten Zeitquellen 8, 9 und 10 sowie Diskontinuitäten, beispielsweise Sprünge, in den Inhalten der jeweiligen Zeitsignale. Hierzu greift die Verarbeitungseinheit 2.1 auf den vierten Speicher 2.6 zu, in dem der Qualitätsprüfungsalgorithmus sowie die Ergebnisse der Qualitätsprüfung abgelegt werden.

Bei der Plausibilitätsprüfung erfolgt die Einstufung eines Zeitsignals als plausibel oder nicht plausibel insofern unter Berücksichtigung der im vierten Speicher 2.6 abgelegten Ergebnisse der Qualitätsprüfung, als den Zeitsignalen mit einer höheren Qualität ein größeres Gewicht bzw. ein Vorrang bei der Entscheidung beigemessen wird, welche Zeitsignale verwendet werden. Liegen beispielsweise die Abweichungen der Inhalte jeweils zweier Zeitsignale in dem vorgegebenen Toleranzbereich, die Abweichungen zwischen diesen Paaren aber außerhalb des Toleranzbereichs, so kann vorgesehen sein, dass für die Berechnung der Zeitinformation dasjenige Paar ausgesucht wird, welches in Summe den höheren Qualitätswert ergibt. Ebenso können natürlich andere, beliebig verfeinerte Entscheidungsalgorithmen unter Berücksichtigung der Ergebnisse der Qualitätsprüfung vorgesehen sein.

Bei der Gewichtung ist das Gewichtungskriterium eine Funktion des für das betreffende Zeitsignal abgelegten Ergebnisses der Qualitätsprüfung. Mit anderen Worten greift die Verarbeitungseinheit 2.1 bei der Gewichtung der einzelnen Inhalte der als plausibel eingestuften Zeitsignale zum einen auf das Gewichtungskriterium im dritten Speicher 2.5 und zum anderen auf das Ergebnis der Qualitätsprüfung im vierten Speicher 2.6 zu.

Es versteht sich, dass für den Fall, dass eines oder mehrere der Zeitsignale beispielsweise infolge von Kommunikationsfehlern nicht verfügbar sind, eine entsprechende Kommunikationsfehlerroutine vorgesehenen ist, im Zuge derer die beschriebene Ermittlung der Zeitinformation gegebenenfalls nur anhand der verfügbaren Zeitsignale durchgeführt wird. Ebenso kann im Rahmen der Kommunikationsfehlerroutine vorgesehenen sein, dass bei unterschreiten einer Mindestanzahl verfügbarer Zeitsignale gegebenenfalls mehrfach versucht wird, eine ausreichende Anzahl von Zeitsignalen zu erlangen. Gelingt dies nicht, kann auch vorgesehen sein, dass dann für die Zeitinformation der Inhalt des vierten Zeitsignals der internen Echtzeituhr 2.4 verwendet wird. Um einen Ausfall einer, mehrerer oder gar aller externer Zeitquellen mit ausreichender Sicherheit überbrücken zu können, sind bevorzugt mehrere solcher interner Echtzeituhren vorgesehen. Zusätzlich oder alternativ hierzu kann auch eine entsprechende Fehlermeldung ausgegeben werden.

Die interne Echtzeituhr 2.4 wird im vorliegenden Beispiel anhand der ermittelten Zeitinformation synchronisiert, d. h. auf den entsprechenden Wert gestellt. Im vorliegenden Beispiel erfolgt dies zumindest jedes Mal, wenn die Zeitinformation ausgelöst durch eine eintreffende Ereignisinformation bestimmt wird. Zumindest in Ruhezeiten, in denen keine entsprechenden Ereignisse auftreten, kann vorgesehen sein, dass die Zeitinformation in vorgegebenen Intervallen auch ohne ein derartiges Ereignis ermittelt wird, um die interne Echtzeituhr 2.4 zu synchronisieren. Um einen Ausfall einer, mehrerer oder gar aller externer Zeitquellen mit ausreichender Sicherheit auch für einen längeren Zeitraum überbrücken zu können, sind bevorzugt mehrere solcher interner Echtzeituhren 2.4 vorgesehen, die dann alle in der beschriebenen Weise synchronisiert werden.

Um die Zeitinformation bis zur primären Zeitquelle rückverfolgbar zu machen, enthält das jeweilige Zeitsignal im vorliegenden Beispiel ein kryptographisches Zertifikat der jeweiligen Zeitquelle. Dieses wird bei der Ermittlung der Zeitinformation in die Zeitinformation übernommen, sofern das betreffende Zeitsignal bei der Berechnung der Zeitinformation tatsächlich verwendet wird.

Die Zeitinformation wird durch die Verarbeitungseinheit in einem bestimmten Format als so genannter Zeitstempel erstellt. Um eine manipulationssichere Verknüpfung der Ereignisinformation mit der Zeitinformation zu realisieren, wird der Zeitstempel, also die Zeitinformation, in der Zeitermittlungseinheit 2 mit der Ereignisinformation zu einer ersten Nachricht verknüpft. Diese erste Nachricht wird dann an eine mit der Verarbeitungseinheit 2.1 der Zeitermittlungseinheit 2 zumindest zeitweise verbundene Zertifizierungseinheit 11 übergeben, die ein erstes kryptographisches Zertifikat für die erste Nachricht erstellt. Durch diese manipulationssichere Verknüpfung der Ereignisinformation mit der Zeitinformation wird die Ereignisinformation mit anderen Worten zuverlässig zeitlich qualifiziert.

Kommt es bei der Ermittlung der Zeitinformation zu Fehlern, welche den Ablauf der Kommunikationsfehlerroutine oder anderer Fehlerroutinen erzwingen, wird in jedem Fall der Ablauf der betreffenden Fehlerroutine protokolliert und diese Fehlerprotokollinformation in die oben beschriebene erste Nachricht integriert, sodass auch die Fehlerprotokollinformation manipulationssicher mit der Ereignisinformation verknüpft ist. Zusätzlich wird in der Zeitermittlungseinheit 2 entsprechendes Fehlerprotokoll gespeichert, das ebenfalls durch eine entsprechende digitale Signatur bzw. ein entsprechendes Zertifikat abgesichert ist.

Die Zertifizierungseinheit 11 arbeitet im vorliegenden Beispiel nach einem X.509-Zertifizierungsverfahren. Hierbei wird in an sich bekannter Weise über der ersten Nachricht eine digitale Signatur mit dem privaten Schlüssel der Zertifizierungseinheit 11 erzeugt. Die Zertifizierungseinheit 11 verknüpft schließlich die erste Nachricht mit dem ersten kryptographischen Zertifikat zu einer ersten zertifizierten Nachricht und übergibt diese erste zertifizierte Nachricht zurück an die Verarbeitungseinheit 2.1, welche diese in einem mit der Verarbeitungseinheit 2.1 verbundenen fünften Speicher 2.7 ablegt.

Diese erste zertifizierte Nachricht kann zu weiteren Verwendung aus dem fünften Speicher 2.7 ausgelesen werden. Hierbei kann sie in einer entsprechenden Datenbank oder lokal in einem entsprechenden Speicher der Zugangskontrolleinrichtung 6 gespeichert werden.

Die Zertifizierungseinheit 11 kann weiterhin genutzt werden, um vorab die Gültigkeit der in den Zeitsignalen enthaltenen Zertifikate der jeweiligen Zeitquellen zu überprüfen. Für den Fall, dass hierbei die Ungültigkeit des Zertifikats ermittelt wird, wird das Zeitsignal dann sofort zurückgewiesen.

Um die manipulationssichere Verknüpfung der Ereignisinformation mit der Zeitinformation sicherzustellen, sind sämtliche an dieser Verknüpfung vor Ort beteiligten Komponenten, also die Zeitermittlungseinheit 2, die Empfangseinheiten 3, 4 und 5, die Zugangskontrolleinrichtung 6 und die Zertifizierungseinheit 11 in einer entsprechend sicheren Umgebung 12 angeordnet. Diese sichere Umgebung 12 ist dabei physisch durch entsprechend sichere Gehäuse und gegebenenfalls zusätzlich logisch durch entsprechend logisch abgesicherte Kommunikationskanäle zwischen diesen Komponenten hergestellt. Weiterhin erfolgt der logische Zugang zu den Komponenten ausschließlich über eine definierte Anzahl von Schnittstellen, wobei eine entsprechende Zugriffskontrolle mit Überprüfung der Zugriffsberechtigung vorgesehen ist. Hierbei können gegebenenfalls an unterschiedliche Berechtigungsstufen gekoppelte unterschiedliche Zugriffsbereiche vorgesehen sein (z. B. Benutzerrechte, Administratorenrechte etc.).

Wie der Figur 1 weiterhin zu entnehmen ist, ist in dem Gebäude eine weitere Ereigniserfassungseinrichtung 13 vorgesehen, die in der sicheren Umgebung angeordnet und mit der Zeitermittlungseinheit 2 verbunden ist. Bei dieser handelt es sich um einen Server 13, der den Zugriff auf eine Datenbank verwaltet. Der Server 13 erfasst dabei als Ereignis den Zugriff sowie die Art des Zugriffs auf die Datenbank und bringt diese Information zusammen mit einer Identifikation des Zugreifers in die Form einer Ereignisinformation. Diese Ereignisinformation wird zur zeitlichen Qualifizierung wiederum an die Zeitermittlungseinheit 2 übergeben und dort in der Weise behandelt, wie sie oben im Zusammenhang mit der Ereignisinformation der Zugangskontrolleinrichtung 6 beschrieben wurde.

Es versteht sich, dass bei anderen Varianten der Erfindung auch eine Reihe weiterer Ereigniserfassungseinrichtungen vorgesehen sein können, die mit einer oder mehreren Zeitermittlungseinheiten verbunden sein können. Hierbei ist die Zuordnung der Ereigniserfassungseinrichtungen zu der Zeitermittlungseinheit nicht räumlich gebunden. Vielmehr kann eine Zeitermittlungseinheit eine oder mehrere räumlich weit entfernte Ereigniserfassungseinrichtungen bedienen.

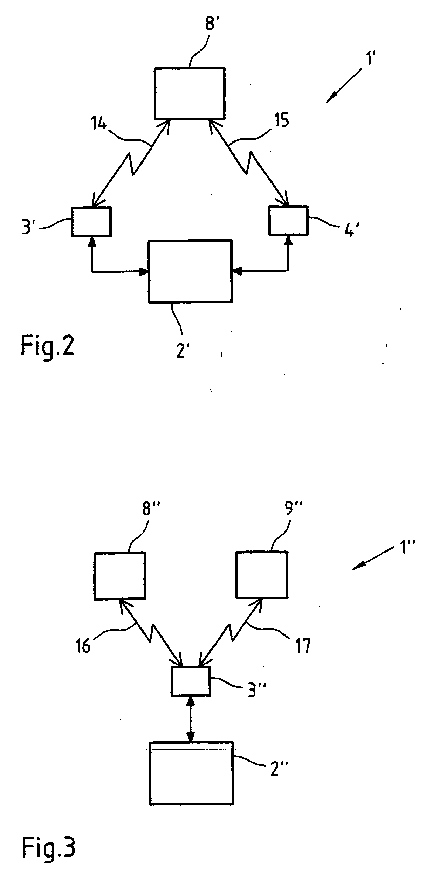

Figur 2 zeigt eine schematische Darstellung einer weiteren bevorzugten Ausführungsform der erfindungsgemäßen Anordnung 1' mit einer Zeitermittlungseinheit 2', einer ersten Empfangseinheit 3' und einer zweiten Empfangseinheit 4' und einer ersten Zeitquelle 8'. Die Anordnung 1',-insbesondere Zeitermittlungseinheit 2', gleicht in ihrem grundsätzlichen Aufbau und ihrer grundsätzlichen Funktion der Anordnung aus Figur 1, sodass hier lediglich auf die Unterschiede eingegangen werden soll.

Der Unterschied besteht darin, dass das erste und zweite Zeitsignal beide von der ersten Zeitquelle 8' stammen, wobei gleichartig ausgebildete Übermittlungskanäle 14 und 15 in Form einer Funkverbindung verwendet werden. Die unterschiedlichen Wege der beiden Zeitsignale zur Zeitermittlungseinheit 2' werden hier über die beiden voneinander getrennten Empfangseinheiten 3' und 4' realisiert. Diese sind zur Erschwerung von Manipulationen räumlich weit voneinander entfernt angeordnet.

Es versteht sich hierbei, dass bei Abwandlungen dieser Variante der Erfindung natürlich auch vorgesehen sein kann, dass sich die beiden Übermittlungskanäle hinsichtlich des Übertragungsprotokolls und/oder der für die Übertragung verwendeten Übertragungstechnologie (Kurzwellenfunk, Langwellenfunk, Mobilfunk, drahtgebundene Übertragung etc.) unterscheiden.

Figur 3 zeigt eine schematische Darstellung einer anderen bevorzugten Ausführungsform der erfindungsgemäßen Anordnung 1" mit einer Zeitermittlungseinheit 2", einer ersten Empfangseinheit 3'', einer ersten Zeitquelle 8 " und einer zweiten Zeitquelle 9". Die Anordnung 1", insbesondere Zeitermittlungseinheit 2", gleicht in ihrem grundsätzlichen Aufbau und ihrer grundsätzlichen Funktion der Anordnung aus Figur 1, sodass auch hier lediglich auf die Unterschiede eingegangen werden soll.

Der Unterschied besteht darin, dass das von der ersten Zeitquelle 8" stammende erste Zeitsignal und das von der zweiten Zeitquelle 9" stammende zweite Zeitsignal beide von der ersten Empfangseinheit 3" empfangen werden, wobei gleichartig ausgebildete Übermittlungskanäle 16 und 17 in Form einer Mobilfunkverbindung verwendet werden.

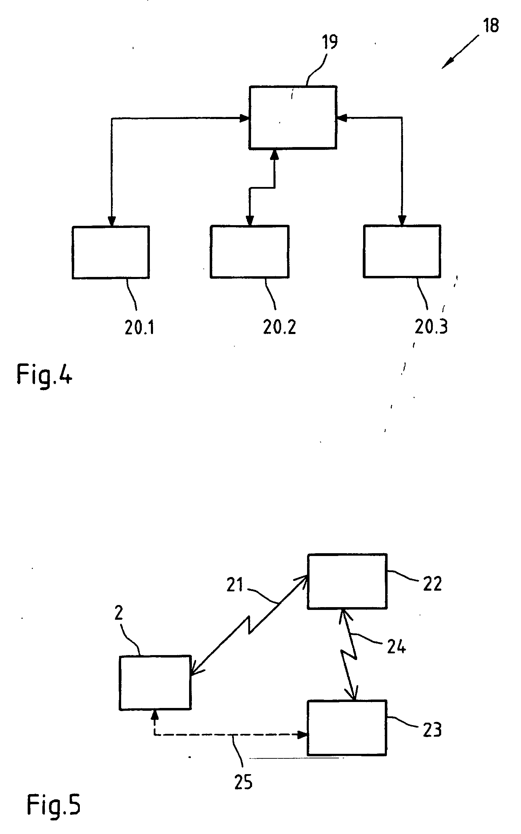

Figur 4 zeigt eine schematische Darstellung einer anderen bevorzugten Ausführungsform der erfindungsgemäßen Anordnung 18 mit einer ersten Zeitermittlungseinheit 19 und einer Reihe damit zumindest zeitweise verbundener zweiter Zeitermittlungseinheiten 20.1, 20.2 und 20.3. Die Zeitermittlungseinheiten 19, 20.1, 20.2 und 20.3. gleichen in ihrem grundsätzlichen Aufbau und ihrer grundsätzlichen Funktion der Zeitermittlungseinheit 2 aus Figur 1, sodass auch hier lediglich auf die Unterschiede eingegangen werden soll.

Der Unterschied besteht darin, dass die zweiten Zeitermittlungseinheiten 20.1, 20.2 und 20.3 von der ersten Zeitermittlungseinheit 19 überprüft werden. Hierbei können die zweiten Zeitermittlungseinheiten 20.1, 20.2 und 20.3 zum einen dahingehend überwacht werden, ob an ihnen Unregelmäßigkeiten auftreten, welche auf Manipulationen oder andere Störungen hinweisen.

Werden solche Unregelmäßigkeiten detektiert, wird durch die erste Zeitermittlungseinheit 19 zumindest ein entsprechendes Fehlersignal ausgegeben. Weiterhin kann für diesen Fall vorgesehen sein, dass die betreffende zweite Zeitermittlungseinheit durch die erste Zeitermittlungseinheit 19 zumindest vorübergehend gesperrt wird.

Die erste Zeitermittlungseinheit 19 kann weiterhin für eine Synchronisation der zweiten Zeitermittlungseinheiten 20.1, 20.2 und 20.3 genutzt werden. Hierzu kann ähnlich dem oben beschriebenen Verfahren für die Ermittlung der Zeitinformation eine globale Zeitinformation aus den Zeitinformationen der einzelnen Zeitermittlungseinheiten 19, 20.1, 20.2 und 20.3 ermittelt werden. Diese globale Zeitinformation kann dann durch die einzelnen Zeitermittlungseinheiten 19, 20.1, 20.2 und 20.3 an Stelle der eigenen Zeitinformation in der oben beschriebenen Weise weiter verwendet werden. Insbesondere kann die globale Zeitinformation zur Synchronisierung der internen Echtzeituhren der Zeitermittlungseinheiten 19, 20.1, 20.2 und 20.3 verwendet werden.

Bei dieser Ausführung ist zur Erschwerung von Manipulationsversuchen weiterhin vorgesehen, dass die Rolle als erste und zweite Zeitermittlungseinheit zufallsgesteuert unter den Zeitermittlungseinheiten 19, 20.1, 20.2 und 20.3 wechselt. Dabei weist die jeweilige die Rolle der ersten Zeitermittlungseinheit einnehmende Zeitermittlungseinheit eine Zufallsfunktion auf, mit welcher der Zeitpunkt des Wechsels und bevorzugt auch diejenige Zeitermittlungseinheit tritt, welche als nächste die Rolle der ersten Zeitermittlungseinheit einnimmt.

So bestimmt im vorliegenden Beispiel die Zeitermittlungseinheit 19, welche zu einem bestimmten Zeitpunkt die Rolle der ersten Zeitermittlungseinheit einnimmt, unter Verwendung der Zufallsfunktion die Zeitermittlungseinheit 20.2 als diejenige Zeitermittlungseinheit, welche als nächste die Rolle der ersten Zeitermittlungseinheit einnehmen soll. Weiterhin bestimmt die Zeitermittlungseinheit 19 den Zeitpunkt, zu dem dieser Rollenwechsel vorgenommen werden soll. Ist dieser Zeitpunkt gekommen, wird der Rollenwechsel von der derzeitigen ersten Zeitermittlungseinheit initiiert. Die ausgewählte zweite Zeitermittlungseinheit 20.2 übernimmt dann die Rolle der ersten Zeitermittlungseinheit, während die bisherige erste Zeitermittlungseinheit 19 dann die Rolle einer zweiten Zeitermittlungseinheit übernimmt.

Figur 5 zeigt eine schematische Darstellung einer weiteren bevorzugten Ausführungsform der erfindungsgemäßen Anordnung mit der Zeitermittlungseinheit 2 aus Figur 1, wobei die übrigen Bestandteile der Anordnung aus Figur 1 aus Gründen der Übersichtlichkeit weggelassen wurden.

Die Zeitermittlungseinheit 2 ist dabei über eine Mobilfunkverbindung 21 mit einer mobilen Ereigniserfassungseinrichtung in Form eines Mobiltelefons 22 verbunden. Bei dem zu erfassenden Ereignis handelt es sich dabei um die Anwesenheit des Mobiltelefons 22 und damit auch seines Benutzers an einem bestimmten Ort. Die Ortsinformation wird durch eine Datenzentrale 23 des Mobilfunknetzbetreibers geliefert. Hierzu wird in bekannter Weise aus den Laufzeiten und/oder Winkelinformationen der Signale des Mobiltelefons 22, welche in den umliegenden Mobilfunkzellen erfasst werden, die Position des Mobiltelefons 22 bestimmt.

Die Ortsinformation wird auf Anforderung des Mobiltelefons 22 von der Datenzentrale 23 generiert und über eine Mobilfunkverbindung 24 an das Mobiltelefon 22 übersandt. Das Mobiltelefon 22 bildet unter Verwendung der Ortsinformation die Ereignisinformation und sendet die Ereignisinformation zusammen mit einer entsprechenden Anforderung zur zeitlichen Qualifizierung der Ereignisinformation über die Mobilfunkverbindung 21 zur Zeitermittlungseinheit 2.

Es versteht sich jedoch, dass die Ortsinformation bei anderen Varianten der Erfindung auch auf andere bekannte Weise ermittelt werden kann. So kann die mobile Ereigniserfassungseinrichtung beispielsweise ein entsprechendes GPS-Modul enthalten, welches die Ortsinformation liefert. Da derartige GPS-Module in der Regel auch ein entsprechendes Zeitsignal zur Verfügung stellen, kann dieses in die Ereignisinformation einfließen und unter anderem für die Berücksichtigung der Laufzeit der Anforderung und/oder eine spätere Plausibilitätsprüfung verwendet werden.

Die Zeitermittlungseinheit 2 führt die zeitliche Qualifizierung in der oben beschriebenen Weise aus, indem sie die Ereignisinformation mit einer entsprechenden Zeitinformation sowie einem kryptographischen Zertifikat über Ereignisinformation und Zeitinformation in einem entsprechenden Datensatz verknüpft. Dieser Datensatz wird zum einen über die Mobilfunkverbindung 21 zurück an das Mobiltelefon 22 gesandt. Zum anderen wird der Datensatz in der Zeitermittlungseinheit 2 gespeichert oder an eine entsprechende andere Stelle, beispielsweise eine Datenbank oder dergleichen, ausgegeben.

Bei anderen Varianten der Erfindung kann auch vorgesehen sein, dass die Ortsinformation nicht über den Umweg des Mobiltelefons 22 zur Zeitermittlungseinheit gelangt. So kann bei Eintreffen einer Qualifizierungsanforderung des Mobiltelefons 22 in der Zeitermittlungseinheit 2 die Ortsinformation von der Zeitermittlungseinheit 2 über eine Verbindung 25 zur Datenzentrale 23 angefordert werden. Die Datenzentrale 23 ermittelt dann die aktuelle Position des Mobiltelefons 22 und sendet diese über die Verbindung 25 zur Zeitermittlungseinheit 2. Die Zeitermittlungseinheit zwei bildet hieraus dann die Ereignisinformation und qualifiziert diese dann in der oben beschriebenen Weise.

Es versteht sich, dass zur Erhöhung der Manipulationssicherheit auch hier wieder die jeweilige Kommunikation zwischen den einzelnen Komponenten in entsprechender Weise abgesichert ist. So sind die Kommunikationsverbindungen 21, 24 und gegebenenfalls 25 bevorzugt als entsprechend sichere Verbindungen gestaltet, beispielsweise durch entsprechende kryptographische Mittel abgesichert.

Die vorstehend beschriebene Variante kann beispielsweise im Zusammenhang mit dem Einsatz von mobilem Servicepersonal oder dergleichen eingesetzt werden. So kann mit ihr beispielsweise der Beginn und das Ende der Anwesenheit bei einem Kunden in entsprechend abgesicherter Weise protokolliert werden. Hierzu löst der Benutzer beispielsweise zu den entsprechenden Zeitpunkten eine entsprechende Anforderung am Mobiltelefon 22 aus. Ebenso können die Anforderungen aber automatisch ohne Einflussnahme des Benutzers zu bestimmten Zeitpunkten ausgelöst werden.

Die Erfindung lässt sich natürlich auch mit beliebigen anderen Anwendungen einsetzen, bei denen die Anwesenheit einer Person oder eines Gegenstands an einem bestimmten Ort zu einem bestimmten Zeitpunkt das zu erfassende zeitliche Ereignis darstellt.

## Patentansprüche

1. Verfahren zur Ermittlung einer Zeitinformation, bei dem eine Zeitermittlungseinheit (2; 2'; 2''; 19, 20.1, 20.2, 20.3) wenigstens ein von einer ersten Zeitquelle (8; 8'; 8'') stammendes erstes Zeitsignal erhält und die Zeitinformation in einem Zeitermittlungsschritt unter Berücksichtigung des ersten Zeitsignals ermittelt wird, **dadurch gekennzeichnet, dass** die Zeitermittlungseinheit (2; 2'; 2"; 19, 20.1, 20.2, 20.3) wenigstens ein zweites Zeitsignal erhält und die Zeitinformation in dem Zeitermittlungsschritt unter Berücksichtigung des zweiten Zeitsignals erfolgt.

2. Verfahren nach Anspruch 1, **dadurch gekennzeichnet, dass** das erste Zeitsignal und das zweite Zeitsignal zumindest abschnittsweise auf unterschiedliche Weise zur Zeitermittlungseinheit (2; 2'; 2''; 19, 20.1, 20.2, 20.3) übermittelt werden.

3. Verfahren nach Anspruch 1 oder 2, **dadurch gekennzeichnet, dass**
- bei der Übermittlung des ersten Zeitsignals und des zweiten Zeitsignals zur Zeitermittlungseinheit (2; 2'; 2''; 19, 20.1, 20.2, 20.3) zumindest abschnittsweise unterschiedliche Übertragungsprotokolle und/oder zumindest abschnittsweise unterschiedliche Übertragungswege genutzt werden.
und/oder
- die Zeitermittlungseinheit (2; 2') das erste Zeitsignal über eine erste Empfangseinheit (3; 3') und das zweite Zeitsignal über eine zweite Empfangseinheit (4; 4') erhält.

4. Verfahren nach einem der vorhergehenden Ansprüche, **dadurch gekennzeichnet, dass** das zweite Zeitsignal von einer zweiten Zeitquelle (9; 9") stammt.

5. Verfahren nach einem der vorhergehenden Ansprüche, **dadurch gekennzeichnet, dass**
- die Zeitermittlungseinheit (2) wenigstens ein drittes Zeitsignal erhält und die Ermittlung der Zeitinformation in dem Zeitermittlungsschritt unter Berücksichtigung des dritten Zeitsignals erfolgt.
und/oder
- in dem Zeitermittlungsschritt ein viertes Zeitsignal einer Echtzeituhr (2.4) der Zeitermittlungseinheit (2) berücksichtigt wird.

6. Verfahren nach einem der vorhergehenden Ansprüche, **dadurch gekennzeichnet, dass** in dem Zeitermittlungsschritt ein Auswahlschritt erfolgt, in dem eine Plausibilitätsprüfung des Inhalts der Zeitsignale nach einem vorgebbaren Plausibilitätskriterium vorgenommen wird und die als plausibel eingestuften Zeitsignale zur Bestimmung der Zeitinformation ausgewählt werden.

7. Verfahren nach einem der vorhergehenden Ansprüche, **dadurch gekennzeichnet, dass** den Inhalten der Zeitsignale nach einem vorgegebenen Gewichtungskriterium eine Gewichtung zugeordnet wird und zur Bestimmung der Zeitinformation ein gewichteter Mittelwert aus den gewichteten Inhalten der zur Bestimmung der Zeitinformation verwendeten Zeitsignale gebildet wird.

8. Verfahren nach einem der vorhergehenden Ansprüche, **dadurch gekennzeichnet, dass**
- anhand der ermittelten Zeitinformation eine Echtzeituhr (2.4) der Zeitermittlungseinheit (2) synchronisiert wird
und/oder
- aus der ermittelten Zeitinformation ein Zeitstempel generiert wird
und/oder
- für die Zeitinformation ein kryptografisches Zertifikat erstellt wird, das insbesondere mit der Zeitinformation verknüpft wird.

9. Verfahren zur zeitlichen Qualifizierung einer ein zeitliches Ereignis repräsentierenden Ereignisinformation, bei dem die Ereignisinformation mit einer Zeitinformation verknüpft wird, **dadurch gekennzeichnet, dass** die Zeitinformation mit einem Verfahren nach einem der vorhergehenden Ansprüche ermittelt wird.

10. Verfahren nach Anspruch 9, **dadurch gekennzeichnet, dass**
- die Zeitinformation mit der Ereignisinformation zu einer ersten Nachricht verknüpft wird, für die erste Nachricht ein erstes kryptographisches Zertifikat erstellt wird und die erste Nachricht mit dem ersten kryptographischen Zertifikat verknüpft wird.
oder
- aus der Zeitinformation ein Zeitstempel generiert wird, für den Zeitstempel ein zweites kryptographisches Zertifikat erstellt und mit dem Zeitstempel zu einer zweiten Nachricht verknüpft wird, die zweite Nachricht mit der Ereignisinformation zu einer dritten Nachricht verknüpft wird, für die dritte Nachricht ein drittes kryptographisches Zertifikat erstellt wird und die dritte Nachricht mit dem dritten kryptographischen Zertifikat verknüpft wird.

11. Anordnung zur Ermittlung einer Zeitinformation mit einer Zeitermittlungseinheit (2; 2'; 2"; 19, 20.1, 20.2, 20.3) und wenigstens einer mit der Zeitermittlungseinheit (2; 2'; 2''; 19, 20.1, 20.2, 20.3) verbundenen ersten Empfangseinheit (3; 3'; 3''), wobei die Zeitermittlungseinheit (2; 2'; 2''; 19, 20.1, 20.2, 20.3) zum Ermitteln der Zeitinformation unter Berücksichtigung wenigstens eines von einer ersten Zeitquelle (8; 8'; 8 ") stammenden, über die erste Empfangseinheit (3; 3'; 3 ") erhaltenen ersten Zeitsignals ausgebildet ist, **dadurch gekennzeichnet, dass** die Zeitermittlungseinheit (2; 2'; 2 " ; 19, 20.1, 20.2, 20.3) zum Ermitteln der Zeitinformation unter Berücksichtigung wenigstens eines über die erste Empfangseinheit (3; 3'; 3") oder eine zweite Empfangseinheit (4; 4') erhaltenen zweiten Zeitsignals ausgebildet ist.

12. Anordnung nach Anspruch 11, **dadurch gekennzeichnet, dass** ein erster Übermittlungskanal (8.1; 14; 16) zur Übermittlung des ersten Zeitsignals an die Zeitermittlungseinheit (2; 2'; 2") vorgesehen ist und ein zweiter Übermittlungskanal (9.1; 15; 17) zur Übermittlung des zweiten Zeitsignals an die Zeitermittlungseinheit (2; 2'; 2") vorgesehen ist, wobei sich der erste Übermittlungskanal (8.1; 14; 16) und der zweite Übermittlungskanal (9.1; 15; 17) zumindest abschnittsweise unterscheiden, wobei insbesondere der erste Übermittlungskanal (8.1) und der zweite Übermittlungskanal (9.1) zumindest abschnittsweise unterschiedliche Übertragungsprotokolle und/oder zumindest abschnittsweise unterschiedliche Übertragungswege aufweisen.

13. Anordnung nach Anspruch 11 oder 12, **dadurch gekennzeichnet, dass** eine erste Zeitquelle (8; 8 ") zum Aussenden des ersten Zeitsignals und eine zweite Zeitquelle (9; 9 ") zum Aussenden des zweiten Zeitsignals vorgesehen ist.

14. Anordnung nach einem der Ansprüche 17 bis 20, **dadurch gekennzeichnet, dass** die Zeitermittlungseinheit (2)
- zum Ermitteln der Zeitinformation unter Berücksichtigung wenigstens eines über eine Empfangseinheit, insbesondere eine dritte Empfangseinheit (5), erhaltenen dritten Zeitsignals ausgebildet ist.
und/oder
- wenigstens eine Echtzeituhr (2.4) umfasst und zum Ermitteln der Zeitinformation unter Berücksichtigung eines vierten Zeitsignals der Echtzeituhr (2.4) ausgebildet ist.

15. Anordnung nach einem der Ansprüche 11 bis 14, **dadurch gekennzeichnet, dass** die Zeitermittlungseinheit (2) eine mit der jeweiligen Empfangseinheit (3, 4, 5) verbundene Verarbeitungseinheit (2.1) aufweist, die zur Berechnung der Zeitinformation unter Berücksichtigung der Zeitsignale und unter Zugriff auf einen Berechnungsalgorithmus ausgebildet ist, der in einem mit der Verarbeitungseinheit verbundenen ersten Speicher (2.2) gespeichert ist.

16. Anordnung nach Anspruch 15, **dadurch gekennzeichnet, dass** die Verarbeitungseinheit (2.1)
- zur Durchführung einer Plausibilitätsprüfung des Inhalts der Zeitsignale unter Zugriff auf einen Plausibilitätsprüfungsalgorithmus und ein vorgebbares Plausibilitätskriterium ausgebildet ist, wobei der Plausibilitätsprüfungsalgorithmus und das vorgebbare Plausibilitätskriterium in einem mit der Verarbeitungseinheit verbundenen zweiten Speicher (2.3) gespeichert sind, und
- zur Berechnung der Zeitinformation aus den Inhalten der als plausibel eingestuften Zeitsignale unter Zugriff auf den Berechnungsalgorithmus ausgebildet ist.

17. Anordnung nach Anspruch 15 oder 16, **dadurch gekennzeichnet, dass** die Verarbeitungseinheit (2.1)
- zur Gewichtung der Inhalte der Zeitsignale unter Zugriff auf einen Gewichtungsalgorithmus und ein vorgebbares Gewichtungskriterium ausgebildet ist,
wobei der Gewichtungsalgorithmus und das vorgebbare Gewichtungskriterium in einem mit der Verarbeitungseinheit verbundenen dritten Speicher (2.5) gespeichert sind, und
- zur Berechnung der Zeitinformation als gewichteter Mittelwert aus den gewichteten Inhalten der verwendeten Zeitsignale ausgebildet ist.

18. Anordnung nach einem der Ansprüche 11 bis 17, **dadurch gekennzeichnet, dass** eine mit der Zeitermittlungseinheit (2) verbundene oder in der Zeitermittlungseinheit (2) integrierte Qualitätsprüfungseinheit (2.1, 2.6) zur Prüfung der Qualität der Zeitsignale vorgesehenen ist.

19. Anordnung nach einem der Ansprüche 11 bis 18, **dadurch gekennzeichnet, dass** die Zeitermittlungseinheit (2) zum Generieren eines Zeitstempels aus der ermittelten Zeitinformation ausgebildet ist.

20. Anordnung nach einem der Ansprüche 11 bis 19, **dadurch gekennzeichnet, dass** eine mit der Zeitermittlungseinheit verbindbare Zertifizierungseinheit (11) vorgesehen ist, die zum Erstellen eines kryptographischen Zertifikats für die Zeitinformation ausgebildet ist, und dass die Zeitermittlungseinheit (2) oder die Zertifizierungseinheit (11) insbesondere zum Verknüpfen der Zeitinformation mit dem kryptographischen Zertifikat für die Zeitinformation ausgebildet ist.

21. Anordnung nach einem der Ansprüche 11 bis 20, **dadurch gekennzeichnet, dass**
- wenigstens eine Ereigniserfassungseinrichtung (6, 13; 22) zum Generieren einer Ereignisinformation vorgesehen ist, die ein zeitliches Ereignis repräsentiert,
- die Ereigniserfassungseinrichtung (6, 13; 22) mit der Zeitermittlungseinheit (2) zur Übermittlung der Ereignisinformation verbindbar ist, und
- zur zeitlichen Qualifizierung der Ereignisinformation die Zeitermittlungseinheit (2) zum Verknüpfen der Ereignisinformation mit der Zeitinformation ausgebildet ist,
wobei insbesondere
- die Zeitermittlungseinheit (2) zum Verknüpfen der Zeitinformation mit der Ereignisinformation zu einer ersten Nachricht ausgebildet ist,
- eine mit der Zeitermittlungseinheit verbindbare Zertifizierungseinheit (11) vorgesehen ist, die zum Erstellen eines ersten kryptographischen Zertifikats für die erste Nachricht ausgebildet ist, und
- die Zeitermittlungseinheit (2) oder die Zertifizierungseinheit (11) zum Verknüpfen der ersten Nachricht mit dem ersten kryptographischen Zertifikat ausgebildet ist.

22. Anordnung nach Anspruch 21, **dadurch gekennzeichnet, dass**
- die Zeitermittlungseinheit zum Generieren eines Zeitstempels aus der ermittelten Zeitinformation ausgebildet ist,
- eine mit der Zeitermittlungseinheit verbindbare Zertifizierungseinheit vorgesehen ist, die zum Erstellen eines zweiten kryptographischen Zertifikats für den Zeitstempel ausgebildet ist,
- die Zeitermittlungseinheit oder die Zertifizierungseinheit zum Verknüpfen des mit Zeitstempels mit dem zweiten kryptographischen Zertifikat zu einer zweiten Nachricht ausgebildet ist
- die Zeitermittlungseinheit zum Verknüpfen der zweiten Nachricht mit der Ereignisinformation zu einer dritten Nachricht ausgebildet ist,
- eine mit der Zeitermittlungseinheit verbindbare Zertifizierungseinheit vorgesehen ist, die zum Erstellen eines dritten kryptographischen Zertifikats für die dritte Nachricht ausgebildet ist, und
- die Zeitermittlungseinheit oder die Zertifizierungseinheit zum Verknüpfen der dritten Nachricht mit dem dritten kryptographischen Zertifikat ausgebildet ist.

23. Anordnung nach Anspruch 21 oder 22, **dadurch gekennzeichnet, dass** die Ereigniserfassungseinrichtung (6, 13; 22) zur Anforderung der zeitlichen Qualifizierung der Ereignisinformation von der Zeitermittlungseinheit bei Auftreten des zeitlichen Ereignisses ausgebildet ist.

24. Anordnung nach einem der Ansprüche 21 bis 23, **dadurch gekennzeichnet, dass** die Zeitermittlungseinheit (2) zur automatischen zeitlichen Qualifizierung einer empfangenen Information ausgebildet ist.

25. Anordnung nach einem der Ansprüche 11 bis 24, **dadurch gekennzeichnet, dass** wenigstens eine erste Zeitermittlungseinheit (19) und wenigstens eine zweite Zeitermittlungseinheit (20.1, 20.2, 20.3) vorgesehen ist, die mit der ersten Zeitermittlungseinheit (19) verbindbar ist, wobei die erste Zeitermittlungseinheit (19) zur Überprüfung der zweiten Zeitermittlungseinheit (20.1, 20.2, 20.3) ausgebildet ist.
